# FASCICULE DE BREVET EUROPEEN

(11) **EP 0 785 608 B1**
(45) Date de publication et mention de la délivrance du brevet: **31.05.2006**
(21) Numéro de dépôt: 97400044.0
(22) Date de dépôt: 09.01.1997
(51) Int. Cl.: H02G 3/00

(54) **Canalisation de distribution électrique à élément flexible**
Elektrische Kabelrinne mit einem flexiblen Element
Electrical distribution duct with flexible element

(30) Priorité: 19.01.1996 FR 9600837
(43) Date de publication de la demande: 23.07.1997
(73) Titulaire: SCHNEIDER ELECTRIC INDUSTRIES SAS, 92500 Rueil-Malmaison (FR)
(72) Inventeur: De Oliveira, David, 21240 Talant (FR); Thierry, Jean-Pierre, 21560 Arc-Sur-Tille (FR); Hubben, Pascal, 21310 Arcelot (FR)
(74) Mandataire: Carias, Alain

(56) Documents cités:
- EP-A- 0 692 855
- FR-A- 2 094 609
- FR-A- 2 353 794
- FR-A- 2 626 723

## Description

La présente invention concerne une canalisation de distribution électrique composable par aboutement de plusieurs éléments logeant chacun dans une enveloppe un ensemble conducteur constitué de plusieurs conducteurs électriques parallèles et comprenant un élément flexible interposable entre d'autres éléments.

Il est connu d'utiliser dans une telle canalisation un élément flexible pour raccorder ente eux mécaniquement et électriquement deux tronçons de canalisation non alignés.

Un élément flexible pour canalisation électrique est décrit par exemple dans le brevet FR-2 626 723.

On constate que la déformation communiquée aux conducteurs lorsqu'on incurve l'élément flexible lors de l'assemblage de la canalisation peut causer de graves défauts de positionnement des extrémités nues des conducteurs ; or celles-ci doivent coopérer parfaitement avec des pinces fixes de connexion pour assurer la continuité électrique de la canalisation.

La demande de brevet FR-2 353 794 décrit un dispositif flexible d'interconnexion comportant des câbles souples présentant à chaque extrémité une fiche de connexion. Chacune des fiches de connexion est constituée de deux moitiés réunies par des rivets. Chaque fiche de connexion loge un bloc borne destiné à recevoir les extrémités des câbles souples. Comme le document précédent, un tel dispositif ne permet pas d'obtenir une jonction mécanique et électrique fiable. En outre, il est peu adapté à une utilisation dans des endroits exposés aux intempéries et à la poussière.

L'invention a pour but d'assurer, dans une canalisation de distribution, une jonction mécanique et électrique simple et résistante d'un élément flexible avec un élément voisin et pouvant être employée dans des environnements exposés aux intempéries ou à la poussière.

Ce but est atteint par une canalisation électrique telle que définie dans la revendication 1.

La fiabilité de la connexion est permise par la combinaison de la pièce de retenue, de l'embout de positionnement et de leur manchon de maintien.

D'autres caractéristiques avantageuses sont définies dans les revendications dépendantes.

La description qui est faite ci-après d'un exemple de réalisation non limitatif de l'invention, au regard de dessins annexés, en explicite les caractéristiques et les résultats.
La figure 1 représente en perspective partiellement éclatée une partie de canalisation conforme à l'invention.
La figure 2 montre en perspective une région d'éclissage d'un élément flexible de la canalisation.
La figure 3 est une vue de côté de cette région.
La figure 4 montre en perspective l'extrémité manchonnée d'un élément flexible.
La figure 5 est une vue en perspective éclatée de cette extrémité.

La canalisation de distribution électrique représentée sur les figures comporte des éléments rigides préfabriqués 10 comprenant une enveloppe métallique rigide tubulaire 11 de longueur déterminée dans laquelle sont insérées une ou deux nappes 12, 13 de conducteurs électriques de puissance 14 et le cas échéant des conducteurs de courants faibles, par exemple d'un bus de liaison. Pour s'adapter à un changement de direction de la canalisation, on insère par exemple entre deux éléments rigides tels que 10 un élément flexible préfabriqué 20. L'élément flexible préfabriqué comprend une enveloppe tubulaire flexible 21, lisse ou ondulée, et dans cette enveloppe en matière souple une ou deux nappes souples 22, 23 de conducteurs électriques de puissance 24, ainsi qu'éventuellement des conducteurs 27 de courants faibles ; l'élément flexible comprend à chacune de ses extrémités un organe de jonction 30 permettant la jonction mécanique des enveloppes 11, 21 et le raccordement électrique des conducteurs 14, 24. Dans l'exemple de réalisation représenté, les conducteurs électriques 24 sont constitués par des fils de section ronde 24a enveloppés par des gaines tubulaires isolantes 24b et assemblés en nappes. Les nappes 22, 23 de conducteurs 24 de l'élément flexible sont découpées longitudinalement en 24c dans la région moyenne de celui-ci, tout en restant jointes dans ses régions extrêmes, de manière à faciliter le débattement des conducteurs dans la région moyenne et à raidir au contraire les nappes dans les régions extrêmes.

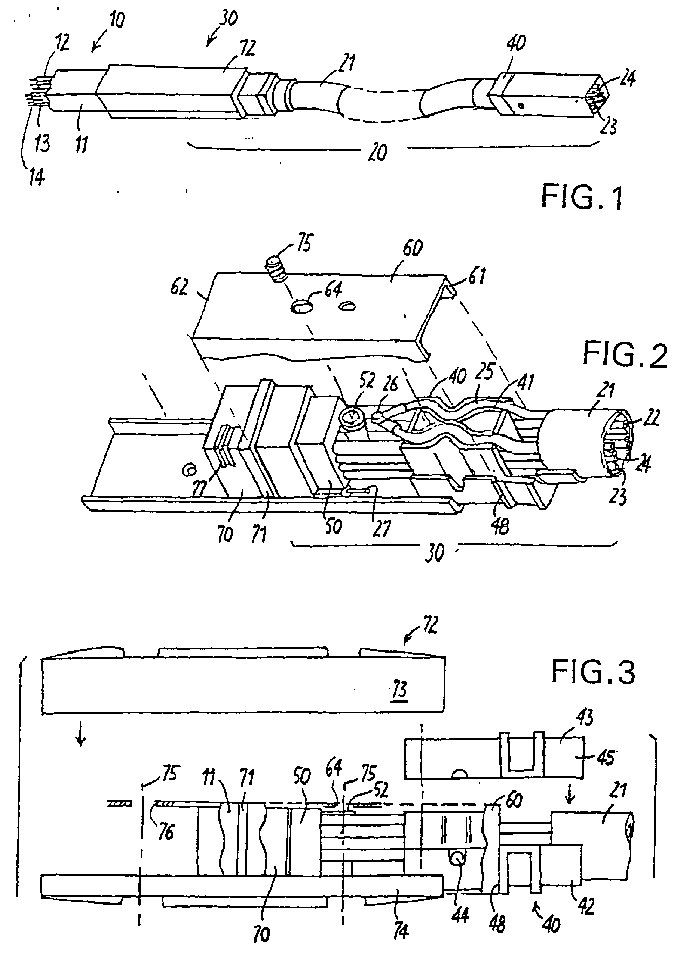

Chaque organe de jonction 30 comporte une pièce de retenue 40 associée à un embout de positionnement 50, ainsi qu'un manchon 60 de recouvrement. La pièce de retenue 40 est destinée à maintenir les régions extrêmes 24d des conducteurs 24, notamment lorsque ceux-ci sont soumis à des efforts de traction, torsion, consécutivement à la flexion de l'enveloppe 21 ; la pièce 40 comprend à cet effet des logements coudés 41, par exemple en forme de lyres (voir figure 2), et éventuellement d'autres moyens de maintien. La pièce de retenue 40 est en matière isolante et se compose d'un corps 42 comprenant les logements 41 et d'un couvercle 43 fixé au corps par tout moyen convenable, par exemple des rivets ou des vis 44 ; le couvercle 43 a été omis sur la figure 2 pour plus de clarté. Le corps et le couvercle sont munis de demi-collets qui se réunissent en un collet cylindrique 45 dans lequel est emmanchée l'extrémité de l'enveloppe flexible 21 ; à l'intérieur du collet sont prévues des nervures et rainures 47 assurant l'étanchéité de l'emmanchement.

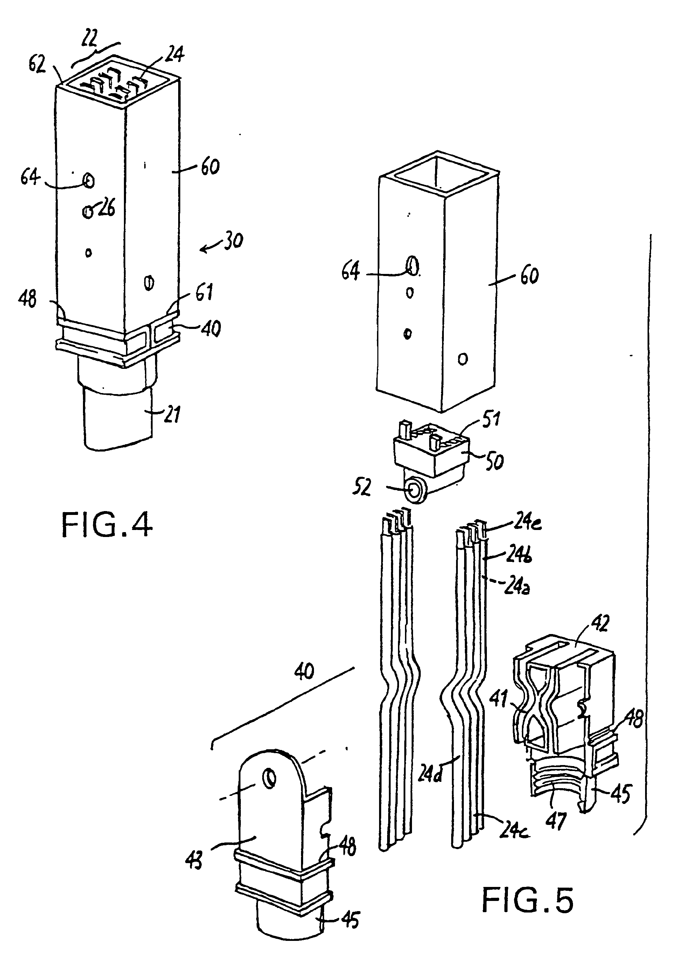

L'embout de positionnement 50 est en matière isolante et comporte des ouvertures longitudinales traversantes 51 (voir figure 5) dans lesquelles sont insérés les conducteurs 24 de manière que les extrémités dénudées et méplates 24e de ceux-ci soient présentées dans la position voulue à des pinces élastiques d'interconnexion non représentées, logées dans une pièce isolante de connexion 70. Les pinces élastiques assurent la connexion de chaque conducteur 24 avec le conducteur correspondant 14 de l'élément rigide voisin 10. Des conducteurs de continuité de terre 25 sont prévus dans l'enveloppe flexible 21 pour être connectés au manchon 60 par un point de connexion 26. Des conducteurs 27 d'un bus de contrôle ou commande peuvent aussi être prévus. Le manchon de recouvrement 60 est métallique et tubulaire, de section carrée ou rectangulaire ; il présente deux extrémités 61, 62 et s'emmanche sur la pièce de retenue 40 jusqu'à ce que l'extrémité 61 bute longitudinalement contre un épaulement 48 de la pièce 40 ; à son autre extrémité 62, le manchon 60 est en butée contre une collerette 71 prévue à l'extérieur et au milieu de la pièce de connexion 70. Le manchon 60 est assemblé à la pièce de retenue par un boulon ou un rivet 44. En butée contre la collerette 71 de la pièce 70, de l'autre côté de celle-ci, est applicable l'extrémité de l'enveloppe métallique rigide 11, qui est tubulaire et de même section que le manchon de recouvrement 60 et loge un embout similaire à l'embout 50 pour présenter les extrémités des conducteurs 14 aux pinces de connexion.

En variante, le manchon 60 peut simplement être constitué par l'extrémité de l'enveloppe tubulaire 11, de l'élément de canalisation voisin 10.

Une coquille d'éclissage 72, composée de deux pièces 73, 74 assemblées entre elles, recouvre une partie de la pièce de retenue 40, l'embout de positionnement 50, le manchon de recouvrement 60, la pièce de connexion 70 et la zone d'extrémité de l'enveloppe rigide 11. Les deux pièces 73, 74 de la coquille 72 sont assemblées au moyen de boulons 75 qui traversent d'une part des puits 52 ménagés dans les embouts de positionnement 50 et d'autre part des orifices 64 du manchon 60 et 76 de l'enveloppe rigide. Il découle de la fixation du manchon dans la coquille que la pièce de retenue, fixée dans le manchon, se trouve donc aussi immobilisée. Des rainures d'étanchéité 77 peuvent être ménagées sur la pièce de connexion 70 des deux côtés de la collerette de butée 71 ; de cette manière, on améliore l'étanchéité d'assemblage de l'enveloppe rigide 11 et du manchon 60 sur la pièce 70.

Dans le mode de réalisation présenté, les organes 30 de jonction situés aux deux extrémités de l'élément flexible sont identiques. Ils peuvent aussi être différenciés pour permettre un assemblage par emboîtement de type mâle-femelle lorsque les extrémités des enveloppes des éléments rigides sont elles-mêmes agencées pour réaliser un tel assemblage.

## Revendications

1. Canalisation électrique composable par aboutement de plusieurs éléments logeant chacun un ensemble conducteur constitué de plusieurs conducteurs électriques parallèles et comprenant un élément flexible (20) interposable entre deux autres éléments (10) qui présentent une enveloppe tubulaire (11), l'élément flexible comportant :
- une enveloppe tubulaire flexible (21) qui loge une nappe de conducteurs flexibles (24),
- à chaque extrémité un organe de jonction (30) à un autre élément,
**caractérisée par le fait que** l'organe de jonction (30) comporte :
- une pièce de retenue (40) munie de logements coudés (41) où sont insérés les conducteurs flexibles (24) et présentant un collet (45) d'emmanchement et d'étanchéité pour l'enveloppe tubulaire flexible (21) et un épaulement (48) de butée longitudinale pour le manchon (60)
- un embout de positionnement (50) pour les extrémités nues des conducteurs flexibles,
- un manchon (60) recouvrant et maintenant l'embout et la pièce de retenue,
- le manchon de recouvrement (60) a une section identique à celle de l'enveloppe métallique rigide voisine (11), le manchon et l'enveloppe rigide étant en butée des deux côtés d'une collerette (71) d'une pièce de connexion (70) recouverte par une coquille d'éclissage (72) et présentant sur le côté des rainures d'étanchéité (77).

2. Canalisation selon la revendication 1, **caractérisée par le fait que** les conducteurs flexibles (24) de la nappe sont dissociés les uns des autres dans la région moyenne de l'enveloppe tubulaire flexible (21) et sont joints en nappe dans ses régions extrêmes.

3. Canalisation selon la revendication 1, **caractérisée par le fait que** le manchon de recouvrement (60) est logé dans une coquille d'éclissage (72) dans laquelle il est maintenu par un boulon (75) de fixation de l'embout de positionnement (50).

4. Canalisation selon la revendication 1, **caractérisée par le fait que** le manchon de recouvrement (60) est constitué par l'extrémité de l'enveloppe tubulaire (11) de l'élément de canalisation voisin à joindre.

## Claims

1. Electrical wiring system which may be composed by joining end to end several elements each housing a conductor unit consisted of several parallel electrical conductors and comprising a flexible element (20) interposable between two other elements (10) having a tubular envelope (11), the flexible element including:
- a flexible tubular envelope (21) which houses an array of flexible conductors (24),
- at each extremity, a junction member (30) to another element,
**characterised in that** the junction member (30) includes:
- a retaining piece (40) equipped with angled housings (41) in which the flexible conductors (24) are housed, and with a fitting and sealing collar (45) for the flexible tubular envelope (21) and a longitudinal stop shoulder (48) for the sleeve (60).
- a positioning end-piece (50) for the bare extremities of the flexible conductors,
- a sleeve (60) covering and holding in place the end-piece and the retaining piece.
- the covering sleeve (60) has a section identical to that of the neighbouring rigid metallic envelope (11), the sleeve and the rigid envelope being stopped on both sides of a collar (71) of a connection piece (70) covered by a fishplating shell (72) and with sealing grooves (77) on one side.

2. Wiring system according to claim 1, **characterised in that** the flexible conductors (24) of the array are dissociated from each other in the middle region of the flexible tubular envelope (21) and are joined together as a flat cable in its end regions.

3. Wiring system according to claim 1, **characterised in that** the covering sleeve (60) is housed in a fishplating shell (72) in which it is maintained by a fixing bolt (75) of the positioning end-piece (50).

4. Wiring system according to claim 1, **characterised in that** the covering sleeve (60) is constituted by the extremity of the tubular envelope (11) of the neighbouring wiring system element to be joined.

## Patentansprüche

1. Elektrische Leitung, die durch Stoßverbindung mehrerer Elemente zusammensetzbar ist, die je eine aus mehreren parallelen elektrischen Leitern bestehende Leitereinheit aufnehmen und ein flexibles Element (20) aufweisen, das zwischen zwei andere Elemente (10) eingefügt werden kann, die eine rohrförmige Hülle (11) aufweisen, wobei das flexible Element aufweist:
- eine flexible rohrförmige Hülle (21), die eine Lage von flexiblen Leitern (24) aufnimmt,
- an jedem Ende ein Verbindungsorgan (30) mit einem anderen Element,
**dadurch gekennzeichnet, dass** das Verbindungsorgan (30) aufweist:
- ein Klemmteil (40), das mit gekrümmten Sitzen (41) versehen ist, in die die flexiblen Leiter (24) eingeführt sind, und das einen Pass- und Abdichtungs-Bundring (45) für die rohrförmige flexible Hülle (21) und eine Längsanschlagschulter (48) für die Muffe (60) aufweist,
- einen Positionieraufsatz (50) für die abisolierten Enden der flexiblen Leiter,
- eine Muffe (60), die den Aufsatz und das Klemmteil bedeckt und hält,
- die Abdeckmuffe (60) den gleichen Querschnitt hat wie die benachbarte steife Metallhülle (11), wobei die Muffe und die steife Hülle zu beiden Seiten eines Kragens (71) eines Verbindungsteils (70) in Anschlag liegen, das von einem Verbindungsgehäuse (72) bedeckt wird und an der Seite Dichtungsrillen (77) aufweist.

2. Leitung nach Anspruch 1, **dadurch gekennzeichnet, dass** die flexiblen Leiter (24) der Lage in der mittleren Zone der flexiblen rohrförmigen Hülle (21) voneinander getrennt und in ihren Endzonen in Lagen vereint sind.

3. Leitung nach Anspruch 1, **dadurch gekennzeichnet, dass** die Abdeckmuffe (60) in einem Verbindungsgehäuse (72) angeordnet ist, in dem sie durch einen Bolzen (75) zur Befestigung des Positionieraufsatzes (50) gehalten wird.

4. Leitung nach Anspruch 1, **dadurch gekennzeichnet, dass** die Abdeckmuffe (60) aus dem Ende der rohrförmigen Hülle (11) des zu verbindenden benachbarten Leitungselements besteht.
